# FASCICULE DE BREVET EUROPEEN

(11) **EP 2 655 423 B1**
(45) Date de publication et mention de la délivrance du brevet: **25.03.2015**
(21) Numéro de dépôt: 11805023.6
(22) Date de dépôt: 21.12.2011
(51) Int. Cl.: C08C 1/14, B60C 1/00, C08J 3/22, C08K 3/36

(54) **PROCÉDÉ DE PRÉPARATION D'UN MÉLANGE-MAÎTRE EN PHASE LIQUIDE**
VERFAHREN ZUR MASTERBATCH-HERSTELLUNG IN DER FLÜSSIGEN PHASE
PROCESS FOR PREPARING A MASTERBATCH IN THE LIQUID PHASE

(30) Priorité: 23.12.2010 FR 1061182; 15.04.2011 FR 1153318
(43) Date de publication de la demande: 30.10.2013
(73) Titulaire: Compagnie Générale des Etablissements Michelin, 63000 Clermont-Ferrand (FR); MICHELIN Recherche et Technique S.A., 1763 Granges-Paccot (CH); Bibette, Jérôme, 75005 Paris (FR); Martinez Pedrero, Fernando, 28040 Madrid (ES)
(72) Inventeur: BIBETTE, Jérôme, F-75005 Paris (FR); MARTINEZ PEDRERO, Fernando, E-28040 Madrid (ES); DE GAUDEMARIS, Benoît, F-63040 Clermont-Ferrand Cedex 09 (FR); BERRIOT, Julien, F-63040 Clermont-Ferrand Cedex 09 (FR)
(74) Mandataire: Cohen, Sylvia
(86) Numéro de dépôt international: PCT/EP2011/073662
(87) Numéro de publication internationale: WO 2012/085135

(56) Documents cités:
- EP-A1- 1 834 980
- EP-A1- 1 834 985
- FR-A1- 2 845 931
- DATABASE WPI Week 201061 Thomson Scientific, London, GB; AN 2010-K86077 XP002670589, & JP 2010 189511 A (TOYO RUBBER IND CO LTD) 2 septembre 2010 (2010-09-02)
- DATABASE WPI Week 200820 Thomson Scientific, London, GB; AN 2008-C69991 XP002670590, & JP 2007 224067 A (BRIDGESTONE CORP) 6 septembre 2007 (2007-09-06)

## Description

L'invention concerne un procédé de préparation d'un mélange-maître en phase liquide d'un ou plusieurs élastomères diéniques, en particulier un latex de caoutchouc naturel, et d'une ou plusieurs charges.

On entend par « mélange-maître » (couramment désigné par son nom anglais « masterbatch »): un composite à base d'élastomère dans lequel a été introduit une ou plusieurs charges et éventuellement d'autres additifs.

Pour obtenir les propriétés de renforcement optimales conférées par une charge dans une bande de roulement de pneumatique et ainsi une haute résistance à l'usure, on sait qu'il convient d'une manière générale que cette charge soit présente dans la matrice élastomérique sous une forme finale qui soit à la fois la plus finement divisée possible et répartie de la façon la plus homogène possible. Or, de telles conditions ne peuvent être réalisées que dans la mesure où cette charge présente une très bonne aptitude, d'une part à s'incorporer dans la matrice lors du mélange avec l'élastomère et à se désagglomérer, d'autre part à se disperser de façon homogène dans cette matrice.

Or, afin d'améliorer la dispersibilité de la charge dans la matrice élastomérique, il est connu de recourir à un mélange d'élastomère et de charge en phase « liquide ». Pour ce faire, il est fait appel à un élastomère sous forme de latex, et à une dispersion aqueuse de la charge, couramment appelée « slurry ».

Le procédé de préparation de mélange-maître en phase liquide comporte une étape de coagulation, qui généralement est initiée par l'ajout d'un agent de coagulation dans le milieu. Le brevet US 5,763,388 enseigne un procédé de préparation en phase liquide d'un mélange-maître d'un latex de polymère et de silice en tant que charge, comprenant l'incorporation au sein du latex d'une silice modifiée. Cette silice a préalablement réagi avec un agent de couplage, cette modification de la silice permettant de disperser uniformément la silice modifiée au sein du latex de polymère. Selon ce document, l'étape de coagulation se fait en présence d'un agent de coagulation.

La charge peut également être du noir de carbone. Dans ce domaine, dès 1955, le problème de la dispersion uniforme des charges, et notamment du noir de carbone au sein du caoutchouc était déjà posé. Ainsi, il est connu du document BE 541816 un procédé de préparation d'un mélange-maître de caoutchouc et de noir de carbone en phase liquide. Ce procédé se fait en continu et utilise des chocs hydrauliques ou une violente agitation mécanique pour réaliser la dispersion du noir de carbone au sein de la matrice élastomérique.

Plus récemment, le document WO97/36724 divulgue un procédé de préparation d'un mélange-maître et un appareillage spécifique permettant d'améliorer la dispersibilité du noir de carbone dans un latex de caoutchouc naturel. Cette technologie répond à deux objectifs : la réalisation de l'étape de coagulation en absence d'agent coagulant et l'obtention d'un mélange-maître, dont la répartition de la charge est uniforme. Toutefois, cette technologie présente un certain nombre d'inconvénients. L'appareillage mis en oeuvre est très complexe et le procédé décrit s'appuie sur des caractéristiques très précises liées à cet appareillage, tel que une géométrie de la zone de coagulation définie ou encore une différence de vitesse de flux définie.

Ainsi, il est recherché un procédé de préparation d'un mélange-maître conduisant à un mélange-maître dont la répartition de la charge est uniforme dans tout le produit, dont le rendement massique et le ratio charge/élastomère sont satisfaisants, ce procédé devant être facile à mettre en oeuvre à partir d'équipements simples.

De plus, il serait intéressant de pouvoir mieux contrôler, voir de commander les phases d'homogénéisation et de coagulation de manière à pouvoir agir sur la répartition de la charge au sein du coagulum.

Or, les demanderesses ont découvert qu'il était possible de contrôler l'homogénéisation du mélange de l'élastomère et de la charge avant la phase de coagulation permettant ainsi d'améliorer la répartition des charges dans la matrice élastomérique, et de faire participer l'ensemble des charges présentes dans la matrice conduisant ainsi à un très bon rendement massique en respectant le taux de charge préalablement introduit.

Avantageusement, le procédé selon l'invention ne nécessite pas l'utilisation d'agent coagulant.

L'invention porte ainsi sur un procédé de préparation d'un mélange-maître en phase liquide à base d'un ou plusieurs latex d'élastomères diéniques et d'une ou plusieurs charges, comprenant les étapes successives suivantes :
- réalisation d'une dispersion aqueuse stable et homogène (C), par mélange
   d'un ou plusieurs latex d'élastomère diénique (A) avec
   une ou plusieurs dispersions aqueuses stables (B) d'une ou plusieurs charges,
- homogénéisation de la dispersion aqueuse (C),
- coagulation au sein de la dispersion aqueuse (C) du ou desdits latex d'élastomère diénique avec les charges par apport d'énergie mécanique,
- récupération du coagulum, puis
- séchage du coagulum récupéré pour obtenir le mélange-maître. L'invention porte également sur un mélange-maître d'élastomère diénique et de charge préparé selon le procédé décrit ci-dessus.

L'invention a aussi pour objet une composition de caoutchouc à base d'au moins un mélange-maître d'élastomère diénique et de charge préparé selon le procédé décrit ci-dessus, un article fini ou semi-fini comportant une composition telle que définie ci-dessus et une bande de roulement de pneumatique comportant une composition telle que définie ci-dessus.

L'invention a enfin pour objet un pneumatique ou produit semi-fini comportant au moins une composition de caoutchouc telle que définie ci-dessus.

D'autres objets, caractéristiques, aspects et avantages de l'invention apparaîtront encore plus clairement à la lecture de la description et des exemples qui suivent.

Par homogène, on entend au sens de la présente invention et de façon classique pour un homme du métier, que la concentration en charges et/ou en latex d'élastomère dans un volume donné soit identique à la concentration en charges et/ou en latex dans le volume total du mélange-maître ou de la dispersion.

L'homme du métier saura vérifier l'homogénéité de la dispersion, si besoin par des mesures de concentration de la charge et/ou du latex d'élastomère à partir de plusieurs prélèvements effectués à différents endroits du volume (par exemple en surface ou plus en profondeur dans la cuve) de la dispersion.

Le but recherché est d'éviter la formation de poches de dispersion de charges au sein du mélange-maître, communément appelées agglomérats.

Par l'expression : composition « à base de », il faut entendre une composition comportant le mélange et/ou le produit de réaction des différents constituants utilisés, certains de ces constituants de base étant susceptibles de, ou destinés à réagir entre eux, au moins en partie, lors des différentes phases de fabrication de la composition, en particulier au cours de sa réticulation chimique.

Dans la présente description, sauf indication expresse différente, tous les pourcentages (%) sont des pourcentages en masse. D'autre part, tout intervalle de valeurs désigné par l'expression "entre a et b" représente le domaine de valeurs allant de plus de a à moins de b (c'est-à-dire bornes a et b exclues), tandis que tout intervalle de valeurs désigné par l'expression "de a à b" signifie le domaine de valeurs allant de a jusqu'à b (c'est-à-dire incluant les bornes strictes a et b).

L'unité de quantité « pce » signifie parties en poids pour cent parties d'élastomère.

### Réalisation de la dispersion aqueuse (C)

La première étape du procédé selon l'invention consiste à réaliser une dispersion aqueuse stable et homogène (C) à partir d'un ou plusieurs latex d'élastomère (A) avec une ou plusieurs dispersions aqueuses de charges (B).

Par dispersion aqueuse stable, on entend au sens de la présente invention une dispersion dans laquelle les constituants de cette dispersion ne coagulent pas, ne floculent pas, ne comportent pas d'agglomérat, et ne sédimentent pas, du moins au niveau macroscopique, c'est-à-dire que son état n'évolue pas dans un temps déterminé à température ambiante sous une pression atmosphérique.

Plus particulièrement, la dispersion stable n'évolue pas au niveau macroscopique dans le temps par rapport à la coagulation spontanée résultant du mélange du noir de carbone et d'un latex de caoutchouc naturel.

### Latex d'élastomère diénique (A)

Par élastomère sous forme de latex, on entend au sens de la présente invention un élastomère se présentant sous forme de particules d'élastomère dispersées dans l'eau.

L'invention concerne les latex d'élastomères diéniques, les élastomères diéniques étant définis comme suit :

Par élastomère ou caoutchouc "diénique", doit être compris de manière connue un élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Parmi ces élastomères diéniques, on distingue par ailleurs le caoutchouc naturel et les élastomères synthétiques.

Pour le caoutchouc naturel (NR) qui convient particulièrement à l'invention, ce caoutchouc naturel existe sous différentes formes comme le détail le chapitre 3 « Latex concentrates : properties and composition », de K.F. Gaseley, A.D.T. Gordon et T.D. Pendle dans « Naturel Rubber Science and Technology », A.D. Roberts, Oxford University Press - 1988.

En particulier plusieurs formes de latex de caoutchouc naturel sont commercialisés : les latex de caoutchouc naturel dits « de champ » (« latex field »), les latex de caoutchouc naturel dits « concentrés » (« concentrated natural rubber latex »), les latex epoxydés (« ENR »), les latex déprotéinisés, les latex ayant subi une étape de clivage de liaison amide ou encore les latex prévulcanisés. Le latex de caoutchouc naturel de champ est un latex dans lequel de l'ammoniac a été ajouté pour éviter une coagulation précoce et le latex de caoutchouc naturel concentré correspond à un latex de champ qui a subi un traitement correspondant à un lavage suivi d'une concentration. Les différentes catégories de latex de caoutchouc naturel concentrés sont répertoriées notamment selon la norme ASTM D 1076-06. Parmi ces latex de caoutchouc naturel concentrés, on distingue notamment des latex de caoutchouc naturel concentrés de qualité dite : « HA » (high ammonia) et de qualité dite « LA » ; on utilisera avantageusement pour l'invention des latex de caoutchouc naturel concentrés de qualité HA.

Le latex peut être utilisé directement ou être préalablement dilué dans de l'eau pour faciliter sa mise en oeuvre.

Par élastomères diéniques synthétiques susceptible d'être utilisé conformément à l'invention, on entend plus particulièrement par élastomère diénique :
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc butyle), ainsi que les versions halogénées, en particulier chlorées ou bromées, de ce type de copolymère.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718, et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973, WO 2009/000750 et WO 2009/000752). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 5 C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 5°C et - 70°C.

En résumé, le ou les élastomères diéniques synthétiques selon l'invention sont choisis préférentiellement dans le groupe des élastomères diéniques fortement insaturés constitué par les polybutadiènes (en abrégé "BR"), les polyisoprènes (IR) de synthèse, les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Ainsi à titre de latex d'élastomère synthétique, le latex peut notamment consister en un élastomère diénique synthétique déjà disponible sous forme d'émulsion (par exemple un copolymère de butadiène et de styrène, SBR, préparé en émulsion), ou en un élastomère diénique synthétique initialement en solution (par exemple un SBR préparé en solution) qui est émulsifié dans un mélange de solvant organique et d'eau, généralement au moyen d'un agent tensioactif.

Convient particulièrement à l'invention un latex de SBR, notamment un SBR préparé en émulsion ("ESBR") ou un SBR préparé en solution ("SSBR"), et plus particulièrement un SBR préparé en émulsion.

Il existe deux grands types de procédés de copolymérisation en émulsion du styrène et de butadiène, l'un d'entre eux, ou procédé à chaud (mis en oeuvre à une température proche de 50° C), étant adapté pour la préparation de SBR très ramifiés alors que l'autre, ou procédé à froid (mis en oeuvre à une température pouvant aller de 15° C à 40° C), permet d'obtenir des SBR plus linéaires.

Pour une description détaillée de l'efficacité de plusieurs émulsifiants utilisables dans ledit procédé à chaud (en fonction des taux desdits émulsifiants), on pourra par exemple se reporter aux deux articles de C. W. Carr, 1. M. Kolthoff, E. J. Meehan, University of Minesota, Minneapolis, Minesota qui ont paru dans Journal of Polymer Science de 1950, Vol. V, n°2, pp. 201-206, et de 1951, Vol. VI, n° 1, pp. 73-81.

Concernant des exemples comparatifs de mise en oeuvre dudit procédé à froid, on pourra par exemple se reporter à l'article ½ Industrial and Engineering Chemistry, 1948, Vol. 40, n° 5, pp. 932-937, E. J. Vandenberg, G. E. Hulse, Hercules Powder Company, Wilmington, Delaware + et a l'article ½ Industrial and Engineering Chemistry, 1954, Vol. 46, n° 5, pp. 1065-1073, J. R. Miller, H. E. Diem, B. F. Goodrich Chemical Co. , Akron, Ohio +.

Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

On notera que l'on peut envisager d'utiliser un ou plusieurs latex de caoutchouc naturel en coupage, un ou plusieurs latex de caoutchouc synthétique en coupage ou un coupage un ou plusieurs latex de caoutchouc naturel avec un ou plusieurs latex de caoutchouc synthétique.

Selon un mode de réalisation préféré de l'invention, le procédé met en oeuvre une dispersion aqueuse de caoutchouc naturel, et plus particulièrement un latex concentré de caoutchouc naturel, et notamment un latex de caoutchouc naturel concentré de qualité dite: « HA » (high ammonia) et de qualité dite « LA ». Plus particulièrement, le latex de caoutchouc naturel concentré de qualité dite : « HA » (high ammonia) est utilisé.

La concentration en caoutchouc naturel dans la dispersion aqueuse (A) va de 10 à 65% en poids, de préférence de 30 à 65% en poids, et notamment de 40 à 65% en poids par rapport au poids total de la dispersion.

### Dispersion aqueuse stable d'une ou plusieurs charges (B)

Par dispersion aqueuse stable, comme définit ci-dessus pour la dispersion aqueuse (C), on attend une dispersion dans laquelle les constituants de cette dispersion, c'est-à-dire les charges ne coagulent pas, ne floculent pas, ne comportent pas d'agglomérat, et ne sédimentent pas, du moins au niveau macroscopique, c'est-à-dire que son état n'évolue pas dans un temps déterminé à température ambiante sous une pression atmosphérique.

Par charge, au sens de la présente invention, on entend l'espèce chimique, qui sera présente dans la dispersion (B) et ajoutée à la dispersion aqueuse de latex d'élastomère diénique (A), pour former la dispersion (C). Ainsi, ce terme pourra désigner une espèce chimique non modifiée, telle que le noir de carbone ou bien une espèce chimique modifiée, telle que la silice hydrophobée.

On peut utiliser tout type de charge renforçante connue pour ses capacités à renforcer une composition de caoutchouc utilisable pour la fabrication de pneumatiques.

De préférence, les charges selon l'invention coagulent spontanément avec l'élastomère diénique.

Quelque soit la nature chimique de la charge, les charges préférées selon l'invention coagulant spontanément avec l'élastomère diénique possèdent des propriétés de surface comparables à celles du noir de carbone non modifié, c'est-à-dire une énergie de surface comparable à celle du noir de carbone. Ces charges peuvent être choisies parmi une charge organique renforçante, telle que du noir de carbone, une charge inorganique renforçante modifiée chimiquement, telle que la silice hydrophobée, une charge organique renforçante modifiée chimiquement, une charge hybride organique/inorganique, une charge à base de polymère et leur mélanges, ces charges coagulant toutes spontanément avec le latex d'élastomère diénique.

De préférence, les charges sont choisies parmi le noir de carbone, le noir de carbone modifié par des fonctions organiques, du noir de carbone traité par de la silice et de la silice modifiée par des fonctions organiques.

Par exemple, il est possible d'utiliser un coupage de deux types de charges différentes, notamment un coupage de noir de carbone et de charge inorganique modifiée.

Selon un premier mode de réalisation, la charge est une charge organique.

### Charges organiques

La charge organique utilisable dans la dispersion aqueuse (B) selon l'invention est de préférence, le noir de carbone.

Comme noirs de carbone conviennent tous les noirs de carbone connus, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375.

On peut aussi utiliser, selon les applications visées, des noirs de séries plus élevées FF, FEF, GPF, SRF, par exemple les noirs N660, N683, N772. Comme exemples de charges organiques autres que des noirs de carbone, on peut citer les charges organiques de polyvinylaromatique fonctionnalisé telles que décrites dans les demandes WO-A-2006/069792 et WO-A-2006/069793, comme par exemple des charges de polyvinylaromatique hydrophobes.

Selon un second mode de réalisation, la charge est une charge inorganique modifiée.

### Charges inorganiques non modifiée

Par "charge inorganique renforçante" selon l'invention, doit être entendu dans la présente demande, par définition, toute charge inorganique ou minérale (quelles que soient sa couleur et son origine (naturelle ou de synthèse)), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique. Dans le cadre de la présente invention, une telle charge se caractérise par son caractère hydrophile, c'est-à-dire généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu, on entend également par charge inorganique renforçante des mélanges de différentes charges inorganiques renforçantes, en particulier de charges siliceuses et/ou alumineuses telles que décrites ci-après.

En tant que silice peut être mentionnée la silice précipitée, pyrogénée ou colloïdale. En tant que charge inorganique, peuvent être citées: la silice (SiO₂), l'alumine (Al₂O₃) ; l'alumine monohydrate (Al₂O₃ H₂O) ; l'hydroxyde d'aluminium [Al(OH)₃] ; le carbonate d'aluminium [Al₂(CO₃)₃] ; l'hydroxyde de magnésium [Mg(OH)₂], l'oxyde de magnésium (MgO), le carbonate de magnésium (MgCO₃), le talc (₃MgO ₄SiO₂ H₂O), l'attapulgite (5MgO 8SiO₂ 9H₂O), le dioxyde de titane (TiO₂), le noir de titane (TiO₂ₙ₋₁), l'oxyde de calcium (CaO), l'hydroxyde de calcium [Ca(OH)2], l'oxyde d'aluminium et de magnésium (MgO Al₂O₃), l'argile (Al₂O₃ 2SiO₂), le kaolin (Al₂O₃ 2SiO₂ 2H₂O), la pyrophyllite (Al₂O₃ 4SiO₂ H₂O), la bentonite (Al₂O₃ 4SiO₂ 2H₂O), le silicate d'aluminium (Al₂SiO₅, Al₄3SiO₄ 5H₂O), le silicate de magnésium (Mg₂SiO₄, MgSiO₃), le silicate de calcium (Ca₂SiO₄), le silicate d'aluminium et de calcium (Al₂O₃ CaO 2SiO₂), le silicate de magnésium et de calcium (CaMgSiO₄), le carbonate de calcium (CaCO₃), l'oxyde de zirconium (ZrO₂), l'hydroxyde de zirconium [ZrO(OH)₂ nH₂O], le carbonate de zirconium [Zr(CO₃)₂], et les aluminosilicates cristallins contenant des atomes d'hydrogène compensant des charges, des métaux alcalins, des métaux alcalino-terreux , tel que les zéolithes, et leur mélange.

Comme charges inorganiques renforçantes conviennent notamment des charges minérales du type silicieuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées, on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

Contrairement au noir de carbone, la charge inorganique renforçante non modifiée ne coagule pas spontanément avec le caoutchouc naturel. Dans le cas particulier de la silice, les agrégats de silice sont typiquement hydrophiles et ont davantage d'affinité avec l'eau qu'avec les particules d'élastomère elles-mêmes.

Différentes solutions ont été proposées pour permettre néanmoins d'obtenir la coagulation et une bonne dispersion de cette charge inorganique renforçante dans la matrice élastomérique en phase liquide.

Ainsi, il est nécessaire de modifier en surface la charge inorganique renforçante, afin de créer l'affinité nécessaire entre les particules de charge et les particules d'élastomère. La capacité de la charge à coaguler avec l'élastomère provient de ses propriétés de surface.

Or, il a été observé de manière surprenante que la présence d'une charge inorganique renforçante hydrophobée au sein de la dispersion aqueuse (B) permet la coagulation de la dispersion aqueuse (C).

### Modification de la charge inorganique renforçante

Pour rendre la charge inorganique renforçante non modifiée selon l'invention hydrophobe, il est greffé sur la particule un ou plusieurs agents hydrophobants de formule (I) suivante :

Eₙ-F (Formule I)

dans laquelle
- n est un entier égal à 1 ou 2,
- lorsque n vaut 1, alors F est un groupe monovalent,
- lorsque n vaut 2, alors F est un groupe divalent,
- E représente un groupe fonctionnel qui est capable de se lier physiquement et/ou chimiquement à la charge et comportant dans sa structure au moins une chaîne alkyle ou alkylène comportant de 1 à 18 atomes de carbone conférant au groupe E des propriétés hydrophobantes ;
- F représente un groupe pouvant se lier ou non physiquement et/ou chimiquement à l'élastomère diénique.

Avantageusement, l'agent hydrophobant est de formule (II) suivante :

[G₍₃₋ₘ₎(L-K)ₘSi-L-]ₙ-F (II)

avec
lorsque n vaut 1, alors F désigne le groupe K défini ci-dessous, et m varie de 0 à 2,
et
lorsque n vaut 2, alors F désigne un groupe amino, un groupe polysulfure (Sx), un groupe époxy, et m varie de 0 à 2,
et pour laquelle
les groupements G sont choisis, indépendamment les uns des autres, parmi un atome d'hydrogène, un groupe hydrocarboné en C₁-C₁₈ choisi parmi les groupes alkyles linéaires, ramifiés ou cycliques, les groupes aralkyles, les groupes alkylaryles et les groupes aryles, tel qu'un phényle, un benzyle, un cyclopentyle, un cyclohexyle, un groupe alkoxy (R₁O)-, dans lequel R₁ représente un radical alkyle saturé en C₁-C₈, tel que par exemple les groupes méthyle, éthyle, isopropyle, de préférence au moins un groupe méthyle et éthyle, un atome d'halogène, tel que le fluor, le chlore, le brome et l'iode et un groupement hydroxy,
à la condition qu'au moins un groupement G soit choisi parmi un groupement alkoxy, un atome de chlore, ou un groupement hydroxy,
L désigne un radical alkylène saturé ou insaturé, linéaire, ramifiée ou cyclique en C₁-C₁₈, et de préférence 1 à 8 atomes de carbone, tel que par exemple les groupes méthylène, éthylène, isopropylène, n-butylène, octadécylène, phénylène, cyclopentylène et cyclohexylène, et comportant éventuellement un atome d'oxygène,
K désigne un atome d'hydrogène, un atome d'halogène, tel que le fluor, le chlore, le brome et l'iode, un groupe fonctionnel choisi parmi un groupe amino, un groupe polyamino alkyle, un groupe mercapto, un groupe époxy, un groupe hydroxy, un groupe vinyle, un groupe acryloxy, un groupe méthacryloxy, un groupe -SCN, un groupe R(CO)S- avec R étant un groupe alkyle en C₁-C₁₈.

De préférence, m=0.

Ainsi, selon un premier mode de réalisation particulier de l'invention, l'agent hydrophobant est de formule (III) suivante :

G₃Si-L-K (III)

avec G, L et K étant tels que définis ci-dessus.

Selon un deuxième mode de réalisation particulier de l'invention, l'agent hydrophobant est de formule (IV) suivante :

[G₃Si-L-]₂-F (IV)

avec G, L et F étant tels que définis ci-dessus.

De préférence, l'agent hydrophobant est choisi parmi le chlorotriméthylsilane, chlorotriéthylsilane, chlorotripropylsilane, bromotriméthylsilane, bromotriéthylsilane, bromotripropylsilane, fluorotriméthylsilane, méthoxy triméthylsilane, méthoxytriéthylsilane, méthoxytripropylsilane, chlorotriméthylsilane, dichlorodiméthylsilane, trichlorométhylsilane, bromotriméthylsilane, dibromodiméthylsilane, tribromométhylsilane, méthoxytriméthylsilane, diméthoxydiméthyl silane, triméthoxyméthyl silane, tétraméthoxysilane, triméthoxypropylsilane, triméthoxyoctylsilane, triméthoxy hexadécylsilane, diméthoxydipropyl silane, triéthoxyméthyl silane, triéthoxypropylsilane, triéthoxyoctylsilane, le diéthoxydiméthylsilane, l'octényldiméthylchlorosilane, (gamma-aminopropyl)-triméthoxy silane, (gamma-aminopropyl)-triéthoxysilane, (gamma-hydroxypropyl) tripropoxysilane, (gamma-mercaptopropyl)-triéthoxysilane, (gamma-aminopropyl)-diméthyléthoxysilane, (gamma-aminopropyl)-dihydroxy méthoxysilane, (glycidylpropyl)-triméthoxysilane, [(N-aminoéthyl) gamma-aminopropyl]triéthoxysilane, (gamma-méthacryloxy-propyl) triéthoxy silane, (gamma-méthacryloxy-propyl)triméthoxy silane, (béta-mercaptoéthyl)-triéthoxysilane, [gamma-(N-aminoéthyl)propyl] triméthoxysilane, N-méthylaminopropyltriméthoxysilane, (gamma-thiocyanatopropyl)-triéthoxy silane, bis-(3-triéthoxythiopropyl) silane tétrasulfure, vinyltriéthoxysilane, vinylphénylméthylsilane, vinyl diméthylméthoxysilane, divinyldiméthoxysilane, divinyléthyl diméthoxysilane, diméthylvinylchlorosilane et leur mélange.

Parmi les composés alkoxysilane-polysulfure connus, doit être particulièrement cité le tétrasulfure de bis 3-triéthoxysilylpropyle (en abrégé "TESPT"), de formule [(C₂H₅O)₃Si(CH₂)₃S₂]₂, commercialisé notamment par la société Degussa sous la dénomination "Si69", sous la forme d'un mélange commercial de polysulfures Sₓ avec une valeur moyenne pour x qui est proche de 4.

Selon un mode de réalisation préféré de l'invention, l'agent hydrophobant est choisi parmi l'octényldiméthylchlorosilane, le tétrasulfure de bis 3-triéthoxysilylpropyle et leur mélange.

Selon l'invention, l'un des groupes alkoxy, ou l'atome d'halogène porté par le silane réagira avec un groupe silanol présent à la surface de la silice, lorsque la charge non modifiée selon l'invention est de la silice.

Avantageusement, la charge est de la silice hydrophobée.

De préférence, l'agent hydrophobant une fois fixé sur la charge inorganique renforçante comporte au plus 30 atomes de carbone, et plus particulièrement de 1 à 25 atomes de carbone.

Par charge hydrophobée, on entend au sens de la présente invention une charge inorganique renforçante qui porte suffisamment d'agents hydrophobants pour permettre la coagulation de la charge avec l'élastomère.

De préférence, la charge hydrophobée se caractérise par un taux d'hydrophobation supérieur ou égale à 0,29 atome de carbone portés par l'agent hydrophobant une fois fixé sur la charge par nm² de surface de charge.

Préférentiellement, le taux d'hydrophobation va de 0,29 à 0,73 atome de carbone/nm² de surface.

La surface spécifique BET d'une charge est généralement mesurée, et de manière connue en soi selon la méthode de BRUNAU-EMMETT-TELLER décrite dans « The Journal of the American Chemical Society », Vol. 60, page 309, Fev. 1938, correspondant à la norme ISO 5794/1.

Dans la dispersion aqueuse (B) comprenant les charges, la concentration en charges est préférentiellement comprise entre 0,1 à 20% en poids, préférentiellement entre 1 à 15% en poids par rapport à l'eau présente dans la dispersion aqueuse de charge (B).

Il est connu que les charges hydrophobes, et notamment le noir de carbone coagule spontanément avec des latex de caoutchouc naturel, c'est-à-dire que la coagulation démarre quasiment instantanément au niveau macroscopique au moment de la mise en contact du noir de carbone et du latex, sous un très faible cisaillement.

Or, il a été observé de manière surprenante que la présence du tensioactif au sein de la dispersion aqueuse (B) permet de stabiliser la dispersion aqueuse (C), c'est-à-dire celle qui résulte du mélange de la dispersion de charge (B) et du latex d'élastomère diénique (A) et ainsi de retarder la phase de coagulation du mélange. De plus, il a été observé, à apport d'énergie mécanique constant apportée au milieu, que la durée de la phase d'homogénéisation de la dispersion (C) est fonction de la quantité de tensioactif présent au sein de cette dispersion.

Ce phénomène a également été observé pour une dispersion aqueuse (B) de charges inorganiques renforçantes hydrophobées, telle que la silice hydrophobée comportant du tensio-actif ; et du latex d'élastomère diénique (A). La présence de tensio-actif au sein de la dispersion aqueuse (B) retarde la coagulation de la dispersion aqueuse (C).

Le latex d'élastomère diénique (A) peut également comprendre un ou plusieurs tensio-actifs.

### Tensioactifs

Ainsi, la dispersion aqueuse de charge (B) comporte un ou plusieurs tensio-actifs, notamment de manière à la rendre stable.

Ce tensioactif peut être anionique, non-ionique, cationique ou amphotérique.

Les agents tensioactifs non-ioniques sont des composés bien connus en soi (voir notamment à cet égard « Handbook of Surfactants » par M.R. Porter, éditions Blackie & Son (Glasgow and London), 1991, pp 116-178). Ainsi, ils peuvent être notamment choisis parmi (liste non limitative) les alcools, les alpha-diols, les alkylphénols, ces composés étant polyéthoxylés et/ou polypropoxylés et ayant une chaîne grasse comportant par exemple 8 à 18 atomes de carbone, le nombre de groupements oxyde d'éthylène ou oxyde de propylène pouvant aller notamment de 2 à 50. On peut également citer les copolymères d'oxyde d'éthylène et de propylène, les condensats d'oxyde d'éthylène et de propylène sur des alcools gras ; les amides gras polyéthoxylés ayant de préférence de 2 à 30 moles d'oxyde d'éthylène, les amides gras polyglycérolés comportant en moyenne 1 à 5 groupements glycérol et en particulier 1,5 à 4 ; les esters d'acides gras du sorbitan oxyéthylénés ayant de 2 à 30 moles d'oxyde d'éthylène ; les huiles polyéthoxylés ayant de préférence de 2 à 50 moles d'oxyde d'éthylène ; les esters d'acides gras du sucrose, les esters d'acides gras du polyéthylèneglycol, les alkylpolyglycosides, les dérivés de N-alkyl glucamine, les oxydes d'amines tels que les oxydes d'alkyl (C₁₀-C₁₄) amines ou les oxydes de N-acylaminopropylmorpholine, les polydiméthylsiloxanes oxyéthylénés et/ou oxypropylénés.

Le ou les agents tensioactifs amphotères ou zwittérioniques, utilisables dans la présente invention, peuvent être notamment des dérivés d'amines aliphatiques secondaires ou tertiaires, éventuellement quaternisées, dans lesquels le groupe aliphatique est une chaîne linéaire ou ramifiée comportant de 8 à 22 atomes de carbone, lesdits dérivés d'amines contenant au moins un groupe anionique tel que, par exemple, un groupe carboxylate, sulfonate, sulfate, phosphate ou phosphonate. On peut citer en particulier les alkyl(C₈₋₂₀)bétaïnes, les sulfobétaïnes, les (alkyl en C₈₋₂₀)amido(alkyl en C₃₋₈)bétaïnes ou les (alkyl en C₈₋₂₀)amido(alkyl en C₆₋₈)sulfobétaïnes.

A titre d'exemple, on peut citer le cocoamphodiacétate commercialisé par la société RHODIA sous la dénomination commerciale MIRANOL® C2M concentré.

Parmi les agents tensioactifs amphotères ou zwittérioniques cités ci-dessus, on utilise de préférence les (alkyl en C₈₋₂₀)bétaïnes tel que la cocoylbétaïne, les (alkyl en C₈₋₂₀)amido(alkyl en C₃₋₈)bétaïnes tel que la cocoylamidopropylbétaïne, et leurs mélanges. Plus préférentiellement, le ou les agents tensioactifs amphotères ou zwittérioniques sont choisis parmi la cocoylamidopropylbétaïne et la cocoylbétaïne.

On entend par « agent tensioactif anionique », un tensioactif ne comportant à titre de groupements ioniques ou ionisables que des groupements anioniques. Ces groupements anioniques sont choisis de préférence parmi les groupements CO₂H, CO₂⁻, SO₃H, SO₃⁻, OSO₃H, OSO₃⁻, H₂PO₃, HPO₃⁻, PO₃²⁻, H₂PO₂, HPO₂⁻, PO₂²⁻POH, PO⁻.

A titre d'exemples d'agents tensioactifs anioniques utilisables dans la composition selon l'invention, on peut citer les alkyl sulfates, les alkyl éther sulfates, les alkylamidoéthersulfates, les alkylarylpolyéthersulfates, les monoglycéride-sulfates, des alkylsulfonates, les alkylamidesulfonates, les alkylarylsulfonates, les alpha-oléfine-sulfonates, les paraffine-sulfonates, les alkylsulfosuccinates, les alkyléthersulfosuccinates, les alkylamide-sulfosuccinates, les alkylsulfo-acétates, les acylsarcosinates, les acylglutamates, les alkylsulfosuccinamates, les acyliséthionates et les N-acyltaurates, les sels de monoesters d'alkyle et d'acides polyglycoside-polycarboxyliques, les acyllactylates, les sels d'acides D-galactoside-uroniques, les sels d'acides alkyl éther-carboxyliques, les sels d'acides alkyl aryl éther-carboxyliques, les sels d'acides alkyl amidoéther-carboxyliques ; et les formes non salifiées correspondantes de tous ces composés ; les groupes alkyle et acyle de tous ces composés comportant de 6 à 24 atomes de carbone et le groupe aryle désignant un groupe phényle.

Lorsque l'agent ou les agents tensioactifs anioniques sont sous forme de sel, il(s) peu(ven)t être choisi(s) parmi les sels de métaux alcalins tels que le sel de sodium ou de potassium et de préférence de sodium, les sels d'ammonium, les sels d'amines et en particulier d'aminoalcools ou les sels de métaux alcalino-terreux tel que le sel de magnésium.

A titre d'exemples de tensioactif cationique, on peut notamment citer les sels d'amines grasses primaires, secondaires ou tertiaires, les sels d'ammonium quaternaire tels que les chlorures ou les bromures de tétraalkylammonium, d'alkylamidoalkyl trialkylammonium, de trialkylbenzylammonium, de trialkylhydroxy alkylammonium ou d'alkylpyridinium ; les dérivés d'imidazoline ; ou les oxydes d'amines à caractère cationique.

De préférence, le tensioactif utilisé est choisi parmi les tensio-actifs anioniques, non-ioniques, amphotériques et leur mélange.

De préférence, les tensio-actifs anioniques sont utilisés, et en particulier les alkyl sulfates. Le tensio-actif particulièrement préféré est le dodécylsulfate de sodium.

Dans la dispersion aqueuse (B) comprenant les charges, la concentration en tensio-actif est préférentiellement strictement supérieure à 0,01% en poids par rapport au poids total de la dispersion aqueuse (B), plus particulièrement strictement supérieure à 0,1%, plus préférentiellement entre 0,1 et 20% en poids, et encore plus préférentiellement entre 0,1 et 2% en poids par rapport au poids total de la dispersion aqueuse (B).

### Préparation de la dispersion aqueuse de charge (B)

La ou les charges selon l'invention, notamment le noir de carbone associé à au moins un tensioactif sont ensuite dispersées dans de l'eau, de préférence de sorte à obtenir une dispersion dont la viscosité est suffisante pour être aisément manipulable.

Avantageusement, la dispersion est sonifiée afin de permettre l'obtention d'une stabilité des agrégats dans l'eau, ce qui permet d'améliorer la dispersibilité de la dispersion aqueuse de charge dans le mélange-maître ensuite réalisé.

Selon un troisième mode de réalisation de l'invention, l'élastomère diénique mis en oeuvre est du caoutchouc naturel et la charge utilisée est de la silice hydrophobée.

Selon un quatrième mode de réalisation de l'invention, l'élastomère diénique mis en oeuvre est du caoutchouc naturel et la charge organique utilisée est du noir de carbone. Ce mode de réalisation est préféré.

### Mise en contact des deux dispersions et phase d'homogénéisation

Le latex de l'élastomère diénique (A) et la dispersion stable de charge (B) sont mis en contact. Le slurry de charge est versé lentement dans le latex d'élastomère, ou inversement, sous une agitation de préférence lente de manière à assurer une bonne homogénéisation du milieu. Le mélange des dispersions (A) et (B) peut également s'effectuer de manière simultanée l'une dans l'autre avec un débit contrôlé est également envisageable.

Comme exposé ci-dessus, la présence du tensioactif dans la dispersion aqueuse de charge (B) constitue un paramètre variable, qui oriente la cinétique de la coagulation du milieu, et ce en gardant constant l'apport d'énergie mécanique.

Le procédé selon l'invention permet ainsi de contrôler, voir de commander la coagulation du milieu. Le contrôle de la durée de la phase d'homogénéisation du latex et du slurry permet d'agir directement sur l'homogénéité du milieu, et du mélange-maître final.

Plus la phase d'homogénéisation sera efficace, plus la répartition des charges dans le coagulum sera homogène.

### Phase de coagulation

Une fois l'homogénéisation effectuée, vient la phase de coagulation.

La coagulation peut être provoquée en apportant au système un apport d'énergie mécanique suffisant. Par exemple, une importante augmentation de la vitesse de cisaillement peut être appliquée au milieu. Selon d'autres modes de réalisation, il est également possible de comprimer le système. Cet apport d'énergie mécanique va déstabiliser de manière simultanée tout le volume et provoquer la coagulation du milieu.

Une autre possibilité est de laisser le milieu sous un apport d'énergie mécanique constant, c'est-à-dire identique à l'apport effectué lors de la phase d'homogénéisation. Par exemple, en conservant un taux de cisaillement constant pour ces deux phases : homogénéisation et coagulation.

Ainsi, une fois que le tensioactif ne permet plus de stabiliser la dispersion (C), alors celle-ci tend à coaguler.

Lorsque l'énergie mécanique apportée au système s'applique sous la forme d'action du cisaillement, des mélangeurs statiques ou bien des mélangeurs dynamiques, tels que des agitateurs à pale peuvent être utilisés.

Il est possible d'utiliser tout type d'appareil permettant un mélange « efficace » de deux produits en phase liquide, ainsi on pourra utiliser un mélangeur statique tel que ceux commercialisés par les sociétés Noritake Co., Limited, TAH aux USA, KOFLO aux USA, ou TOKUSHU KIKA KOGYO Co., Ltd. ou un mélangeur réalisant un haut cisaillement tel que des mélangeurs commercialisés par TOKUSHU KIKA KOGYO Co., Ltd., ou par la société PUC en Allemagne, par la société CAVITRON en Allemagne ou par la société SILVERSON au Royaume Uni.

Lors de la phase de coagulation de ces deux dispersions, un coagulum d'élastomère et de charge se forme soit sous forme d'un seul élément solide dans la solution, soit sous forme de plusieurs éléments solides séparés.

Le volume de dispersion aqueuse de la charge (B) dépend du taux de charge visé pour le mélange-maître à réaliser, du volume du latex d'élastomère diénique (A) et de leur concentration respective.

Ainsi le volume sera adapté en conséquence. Avantageusement, le taux de charge visé pour le mélange-maître est compris entre 10 et 150 pce, de préférence entre 10 à 100 pce et plus préférentiellement entre 15 et 90 pce, encore plus préférentiellement entre 15 et 70 pce.

De préférence, le procédé selon l'invention ne comporte pas l'ajout d'agent de coagulation. C'est l'apport de l'énergie mécanique au système, qui provoque la coagulation.

Ainsi, la quantité d'énergie mécanique apportée au système et la teneur en tensioactif présent dans la dispersion aqueuse (C) sont deux paramètres permettant le contrôle de la cinétique des phases d'homogénéisation et de coagulation.

Selon un autre mode de réalisation, il est possible d'ajouter à la dispersion (C) un ou plusieurs agents de coagulation de manière à améliorer le rendement de l'étape de coagulation. Dans cette éventualité, l'agent de coagulation n'est pas le facteur responsable du déclenchement de la coagulation.

### Récupération du solide formé

Le ou les solides sont récupérés par exemple par filtration ou par centrifugation. En effet, l'opération de filtrage qui peut être réalisée à l'aide d'un tamis de filtration, peut s'avérer inadaptée lorsque le coagulum se présente sous forme de nombreux et petits éléments solides. Dans un tel cas, on réalise de préférence une opération de centrifugation supplémentaire.

A l'issue de cette étape de filtrage ou de centrifugation, le coagulum obtenu est séché, par exemple à l'étuve.

Le procédé selon l'invention peut s'effectuer de manière continue, aussi bien que de manière discontinue.

### Additifs

Le latex d'élastomère diénique (A) et la dispersion aqueuse de charge (B) conformes à l'invention peuvent comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation exclusion faite bien entendu des activateurs à base de zinc (ou dans le respect des 0,5 pce maximum de zinc dans la composition, et de préférence moins de 0,3 pce).

De préférence, ces dispersions comportent, à titre d'agent plastifiant préférentiel non aromatique ou très faiblement aromatique, au moins un composé choisi dans le groupe constitué par les huiles naphténiques, paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés.

Le latex d'élastomère diénique (A) et la dispersion aqueuse de charge (B) peuvent également contenir, des agents de couplage, des activateurs de couplage, des agents de recouvrement de la charge inorganique renforçante ou plus généralement des agents d'aide à la mise en oeuvre susceptibles de manière connue, grâce à une amélioration de la dispersion de la charge inorganique ou organique dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanolamines), des POS hydroxylés ou hydrolysables, par exemple des α,ω-dihydroxy-polyorganosiloxanes (notamment des α,ω-dihydroxypolydiméthyl siloxanes), des acides gras comme par exemple l'acide stéarique.

Les additifs décrits précédemment pourraient également être incorporés au mélange maître avant la phase de coagulation et/ou après la formation du coagulum.

L'invention porte également sur un mélange-maître d'élastomère diénique et de charge préparé selon le procédé décrit ci-dessus.

L'invention a aussi pour objet une composition de caoutchouc à base d'au moins un mélange-maître d'élastomère diénique et de charge préparé selon le procédé décrit ci-dessus.

Les compositions de caoutchouc de l'invention sont fabriquées dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Selon un mode de réalisation préférentiel l'invention, de tous les constituants de base des compositions de l'invention, à l'exception du système de vulcanisation, à savoir le mélange-maître, et des éventuels additifs du mélange-maître le cas échéant, sont incorporés de manière intime, par malaxage, à l'élastomère diénique au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, à l'exception du système de vulcanisation. La durée totale du malaxage, dans cette phase non-productive, est de préférence comprise entre 1 et 15 min. Après refroidissement du mélange ainsi obtenu au cours de la première phase non-productive, on incorpore alors le système de vulcanisation à basse température, généralement dans un mélangeur externe tel qu'un mélangeur à cylindres; le tout est alors mélangé (phase productive) pendant quelques minutes, par exemple entre 2 et 15 min.

Le système de vulcanisation proprement dit est préférentiellement à base de soufre et d'un accélérateur primaire de vulcanisation, en particulier d'un accélérateur du type sulfénamide. A ce système de vulcanisation peuvent venir s'ajouter, incorporés au cours de la première phase non-productive et/ou au cours de la phase productive, divers accélérateurs secondaires ou activateurs de vulcanisation connus, à l'exclusion du zinc et de tout dérivé de zinc tel que ZnO ou en respectant une teneur en zinc de la composition inférieure à 0,5 pce, et de préférence inférieure à 0,3 pce, tels que par exemple des acides gras comme l'acide stéarique, des dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme une bande de roulement de pneumatique pour véhicule tourisme.

L'invention porte également sur l'utilisation de tensio-actif pour retarder la phase de coagulation de la dispersion aqueuse (C).

L'invention concerne également un article fini ou semi-fini comportant une composition telle que définie ci-dessus.

L'invention concerne encore une bande de roulement de pneumatique comportant une composition telle que définie ci-dessus.

L'invention a enfin pour objet un pneumatique ou produit semi-fini comportant au moins une composition de caoutchouc telle que définie ci-dessus.

Les exemples suivants servent à illustrer l'invention sans toutefois présenter un caractère limitatif.

### EXEMPLES DE REALISATION DE L'INVENTION

### Matériel utilisé

- générateur d'ultrasons Vibracell de modèle VCX500 (réf. Fischer W75042) de puissance 500 W, utilisé à 60% de sa puissance maximale.
- sonde de sonication standard ayant un diamètre de 13 mm, adaptée pour la sonication de volumes compris entre 10 et 250 ml. (réf. Fischer W75482).
- Rhéomètre à vitesse de cisaillement contrôlée (Rheometrix RFSII) de géométrie cône/plan et de diamètre 50 mm (le plateau étant en acier inoxydable RFSII-ES-SP50, Cône RFSII-TC50.04), une distance entre le rotor et le stator de 45 µm, et un volume d'échantillon d'environ 3 ml. La température est maintenue entre 23±2°C pendant les mesures, dans un bain d'eau à température constante. Un joint de solvant est utilisé pour minimiser l'évaporation de l'eau (huile de vaseline VWR24679.921).
- 1 agitateur magnétique + 1 barreau aimanté
- verrerie : béchers de taille 15 ml (réf. VWRN 15 ml 213-3916) ; 50 ml (réf. VWR 50 ml 212-9301).

### Réactifs :

Latex de caoutchouc naturel concentré High Ammonia à 60% en poids de caoutchouc naturel provenant de Trang Latex CO, LTD, Thaïlande,
Poudre de noir de carbone N234
Poudre de silice broyée avec un mortier, silice Zeosil (Z 1165MP de la société Rhodia), de surface spécifique BET : 160 m²/g Eau distillée
Sulfate de dodécyl de sodium (SDS) provenant de Aldrich

### 1. Evaluation de la valeur du temps caractéristique τ en fonction de la vitesse de cisaillement

### Mélange-maître préparé

Les réactifs utilisés pour préparer le mélange-maître figurent dans le tableau suivant. Les teneurs en réactifs sont exprimées en g%.

| | |
|---|---|
| Dispersion aqueuse (C) | 1 |
| caoutchouc naturel | 20 |
| Noir de carbone | 5,14 |
| SDS | 0,53 |
| Eau distillée | qsp |

Le mélange-maître 1 est préparé selon un procédé conforme à l'invention, et ce de manière suivante.

### Préparation du latex de caoutchouc naturel : latex (A)

Le latex de caoutchouc naturel est pesé dans un bécher en verre. Un barreau aimanté y est ajouté. Il est ensuite dilué dans de l'eau distillée jusqu'à une concentration de 40% en poids de caoutchouc naturel.

### Préparation des slurries de noir de carbone : dispersions aqueuses de charge (B)

Après avoir pesé le noir, l'eau et le tensioactif : le dodécylsulfate de sodium noté SDS, les réactifs sont mis en contact dans un bécher en verre de 50mL (forme basse).

Puis l'ensemble est homogénéisé à l'aide d'une sonde ultrason à deux reprises, pendant 2 minutes. Le noir de carbone aggloméré sur la sonde à la fin des deux minutes est incorporé au mélange à l'aide d'une spatule.

### Préparation des mélange-maîtres

La dispersion aqueuse (B) est légèrement agitée avant le mélange avec la dispersion (A), afin de minimiser d'éventuels effets de sédimentation des charges. Un volume du dispersion aqueuse (B) est versé lentement dans un même volume de dispersion aqueuse (A) sous une agitation manuelle à la spatule, conduisant à la dispersion aqueuse (C) 1 décrite dans le tableau ci-dessus.

L'échantillon est placé dans le rhéomètre, le cône étant ensuite placé dessus délicatement et en mode manuel de manière à ne pas induire des forces de cisaillement avant la mesure.

### Evaluation du temps caractéristique τ

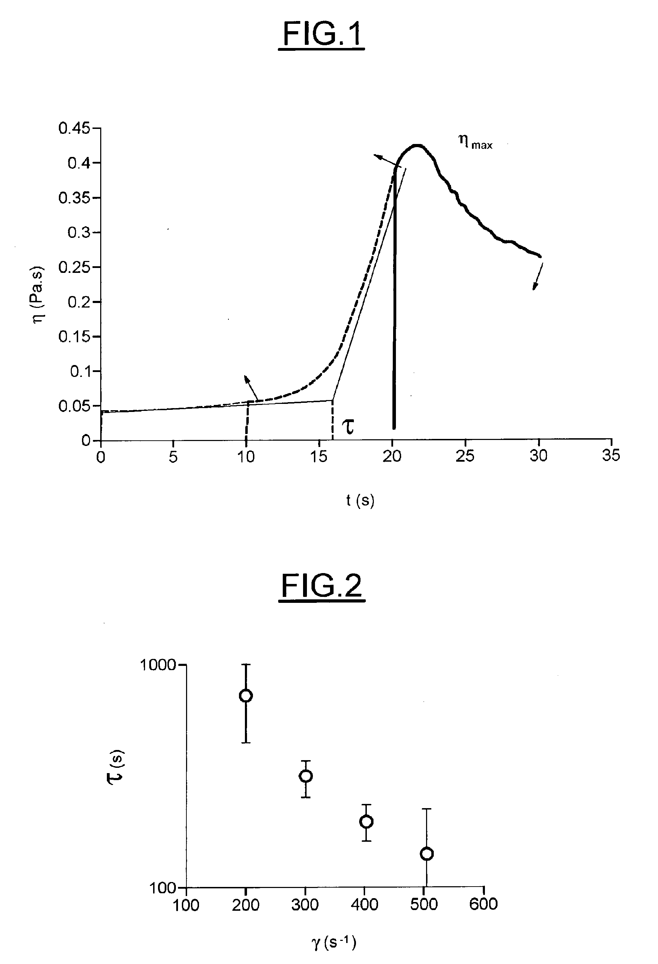

Le temps caractéristique τ est mesuré selon la méthode suivante. L'évolution dans le temps de la viscosité est mesurée pour un échantillon à une vitesse de cisaillement donnée, par exemple dans la figure 1 à 500s⁻¹, pendant des intervalles de 10 secondes, alternés avec des intervalles de 80 secondes, pendant lesquelles ont été mesurées les propriétés en dynamique à un taux de déformation maximum de 0,2% et à une fréquence de 1Hz.

La viscosité de l'échantillon augmente très fortement sous l'effet du cisaillement reflétant la déstabilisation soudaine de la dispersion aqueuse (C). D'autre part, de petits solides élastiques apparaissent entre le rotor et le stator du rhéomètre à la fin de la mesure.

La figure 1 illustre l'évolution dans le temps de la viscosité. Le temps caractéristique τ est calculé par extrapolation linéaire à la fois du plateau initial de viscosité et de la montée rapide lors de la coagulation. Le temps caractéristique τ est déterminé à l'intersection de ces deux courbes extrapolées, comme le montre la figure 1.

### Mesure du temps caractéristique τ à différentes vitesses de cisaillement

La dispersion aqueuse (C) 1 est placée dans le rhéomètre. Une série de mesures du temps caractéristique τ avant coagulation est effectuée à partir de la dispersion 1 pour plusieurs vitesses de cisaillement : 200, 300, 400 et 500 s⁻¹. La figure 2 reprend les valeurs obtenues en tenant compte d'une estimation de l'écart-type.

La figure 2 montre le temps caractéristique τ en fonction de la vitesse de cisaillement. Afin d'éviter de possibles réarrangements d'agrégats de noir de carbone et de caoutchouc naturel, qui pourraient influencer le milieu, et ainsi les résultats, toutes les mesures ont été effectuées quelques secondes après le mélange.

### Conclusion

Ces résultats montrent que plus la vitesse de cisaillement appliquée à la dispersion (C) est élevée, plus la valeur du temps caractéristique τ diminue.

Ainsi, ces tests montent que l'apport d'énergie mécanique influence directement la durée de la phase d'homogénéisation précédant la phase de coagulation.

### 2. Evaluation de la valeur du temps caractéristique τ en fonction de la concentration en tensioactif avec du noir de carbone en tant que charge

### Mélange-maîtres préparés

Les réactifs utilisés pour préparer les mélange-maîtres figurent dans le tableau suivant. Les teneurs en réactifs sont exprimées en g%.

| | | | |
|---|---|---|---|
| Dispersions aqueuses (C) | 2 | 3 | 4 |
| caoutchouc naturel | 20 | 20 | 20 |
| Noir de carbone | 5,15 | 5,14 | 5,13 |
| SDS | 0,50 | 0,55 | 0,61 |
| Eau distillée | qsp | qsp | qsp |

Les mélange-maîtres 2 à 4 sont préparés selon un procédé conforme à l'invention, et selon le protocole décrit ci-dessus.

### Evaluation du temps caractéristique τ

Une vitesse de cisaillement de 100 s⁻¹ est appliquée pour chacun des mélanges 2 à 4 et le temps caractéristique avant coagulation est mesuré. Les mesures figurent dans le tableau ci-dessous.

| | | | |
|---|---|---|---|
| Dispersions aqueuses (C) | 2 | 3 | 4 |
| τ (s) | < 50 | 150-250 | 500-800 |

### Conclusion :

Ces résultats montrent que plus la quantité en tensio-actif présent dans la dispersion aqueuse (C) est importante, plus la valeur du temps caractéristique τ est élevée, conduisant ainsi à un retard de la coagulation du milieu.

Ainsi, ces exemples montrent que la durée de la phase d'homogénéisation précédant la phase de coagulation peut être contrôlée par la quantité de tensio-actif présent dans la dispersion aqueuse (C) et par l'énergie mécanique apportée à la dispersion aqueuse (C).

Le début de la phase de coagulation peut être également contrôlée par un apport d'énergie mécanique supplémentaire.

### 3. Evaluation de la valeur du temps caractéristique τ en fonction de la concentration en tensioactif avec de la silice hydrophobée en tant que charge

### Préparation de la silice hydrophobée

La silice est broyée en une poudre fine à l'aide d'un mortier et d'un pilon. L'hydrophobicité de la silice est ajustée par silanisation de sa surface avec de l'octényldiméthylchlorosilane(ODCS).

La silice hydrophobée est préparée en faisant réagir 5g de silice hydrophile avec 0,08g de ODCS en présence de 50g de toluène, conduisant à une silice hydrophobée, dont le taux d'hydrophobation est de 0,29 atome de carbone/nm² de surface de charge.

Les 0,08g de ODCS sont dissouts dans du toluène. Le milieu est placé sous agitation à l'aide d'un agitateur magnétique. La poudre de silice broyée est ajoutée au milieu et la dispersion est laissée sous agitation pendant deux minutes. La composition est placée dans une boîte Pétri (de diamètre 18,5cm) et est placée à une température de 70°C pendant une heure de manière à permettre l'évaporation du toluène. La poudre obtenue est dispersée dans de l'eau distillée après deux minutes de sonication.

### Mélange-maîtres préparés :

Un mélange-maître est préparé selon un procédé conforme à l'invention et ce de manière suivante.

Les réactifs utilisés pour préparer les mélange-maîtres figurent dans le tableau suivant. Les teneurs en réactifs sont exprimées en g.

| | | | |
|---|---|---|---|
| Dispersions aqueuses (C) | 5 | 6 | 7 |
| Latex de caoutchouc naturel à 60% | 3,3 | 3,3 | 3,3 |
| Silice hydrophobée | 3,3 | 3,3 | 3,3 |
| SDS | 0,008 | 0,010 | 0,012 |
| Eau distillée | qsp | qsp | qsp |

### Préparation de la dispersion aqueuse A de latex de caoutchouc naturel

Le latex de caoutchouc naturel est pesé dans un becher en verre, un barreau aimanté y est ajouté, il est ensuite dilué dans de l'eau distillée jusqu'à une concentration de 60 % en poids de caoutchouc naturel.

### Préparation de la dispersion aqueuse de charge B

2,32g de silice hydrophobée telle que préparée ci-dessus sont dispersés dans 20ml d'eau. Puis l'ensemble est homogénéisé à l'aide d'une sonde ultrason pendant deux minutes. La silice agglomérée sur la sonde à la fin des deux minutes est incorporée au mélange à l'aide d'une spatule.

### Préparation du mélange-maître

3,3g de dispersion aqueuse (B) sont introduits dans un becher de 15 ml avec un barreau aimanté. La quantité de Sodium Dodécyl Sulfate appropriée y est ajoutée. Le milieu est agité à l'aide d'un barreau aimanté pendant 30 secondes à 700rpm, afin d'homogénéiser la dispersion B. Puis 3,3g de la dispersion aqueuse (A) sont ajoutés au milieu. Cette opération est réalisée pour les différentes quantités de Sodium Dodécyl Sulfate des compositions 5 à 6.

### Evaluation du temps caractéristique τ

Une vitesse de cisaillement de 700rpm est appliquée pour chacun des mélanges 5 à 7 et le temps caractéristique avant coagulation est mesuré. Les mesures figurent dans le tableau ci-dessous.

| | | | |
|---|---|---|---|
| Dispersions aqueuses (C) | 5 | 6 | 7 |
| τ (s) | < 50 | 100 | 425 |

### Conclusion :

Ces résultats montrent que plus la quantité en tensio-actif présent dans la dispersion aqueuse (C) est importante, plus la valeur du temps caractéristique τ est élevée, conduisant ainsi à un retard de la coagulation du milieu.

Ainsi, ces exemples montrent que la durée de la phase d'homogénéisation précédant la phase de coagulation peut être contrôlée par la quantité de tensio-actif présent dans la dispersion aqueuse (C) et par l'énergie mécanique apportée à la dispersion aqueuse (C).

## Revendications

1. Procédé de préparation d'un mélange-maître en phase liquide à base d'un ou plusieurs latex d'élastomères diéniques et d'une ou plusieurs charges comprenant les étapes successives suivantes :
- réalisation d'une dispersion aqueuse stable et homogène (C), par mélange,
d'un ou plusieurs latex d'élastomère diénique (A) avec
une ou plusieurs dispersions aqueuses stables (B) d'une ou plusieurs charges,
- homogénéisation de la dispersion aqueuse (C),
- coagulation au sein de la dispersion aqueuse (C) du ou desdit latex d'élastomères diéniques avec la ou les charges par apport d'énergie mécanique,
- récupération du coagulum,
- séchage du coagulum récupéré pour obtenir le mélange maître.

2. Procédé selon la revendication 1, **caractérisé en ce que** la phase de récupération du coagulum est réalisée par une opération de filtrage.

3. Procédé selon la revendication 1, **caractérisé en ce que** la phase de récupération du coagulum est réalisée par une opération de centrifugation.

4. Procédé selon l'une quelconque des revendications 1 à 3, **caractérisé en ce que** le latex d'élastomère diénique est un latex de caoutchouc naturel.

5. Procédé selon la revendication 4, **caractérisé en ce que** le latex d'élastomère diénique est un latex concentré de caoutchouc naturel.

6. Procédé selon l'une quelconque des revendications précédentes, **caractérisé en ce que** la charge coagule spontanément avec le ou lesdits latex d'élastomères diéniques.

7. Procédé selon la revendication précédente, **caractérisé en ce que** la charge est le noir de carbone.

8. Procédé selon la revendication 6, **caractérisé en ce que** la charge est de la silice hydrophobée.

9. Procédé selon l'une quelconque des revendications 6 à 8, **caractérisé en ce que** la dispersion aqueuse (B) comporte un ou plusieurs tensioactifs.

10. Procédé selon la revendication 9, **caractérisé en ce que** le tensioactif est un tensioactif anionique.

11. Procédé selon la revendication 10, **caractérisé en ce que** le tensioactif est du dodécyle sulfate de sodium.

12. Procédé selon l'une quelconque des revendications 9 à 11, **caractérisé en ce que** la concentration en tensio-actif dans la dispersion aqueuse (B) est strictement supérieure à 0,01% en poids par rapport au poids total de la dispersion aqueuse (B).

13. Composition de caoutchouc à base d'au moins un mélange-maître d'élastomère diénique et de charge préparé selon l'une quelconque des revendications 1 à 12.

14. Bande de roulement de pneumatique comportant une composition selon la revendication 13.

15. Pneumatique ou produit semi-fini comportant au moins une composition de caoutchouc selon la revendication 13.

## Patentansprüche

1. Verfahren zur Herstellung eines Masterbatch in flüssiger Phase auf Basis eines oder mehrerer Dienelastomerlatices und eines oder mehrerer Füllstoffe, umfassend die folgenden aufeinanderfolgenden Schritte:
- Herstellen einer stabilen und homogenen wässrigen Dispersion (C) durch Mischen eines oder mehrerer Dienelastomerlatices (A) mit
einer oder mehreren stabilen wässrigen Dispersionen (B) eines oder mehrerer Füllstoffe,
- Homogenisieren der wässrigen Dispersion (C),
- Koagulieren des Dienelastomerlatex oder der Dienelastomerlatices mit dem Füllstoff oder den Füllstoffen in der wässrigen Dispersion (C) durch Eintrag von mechanischer Energie,
- Gewinnen des Koagulats,
- Trocknen des gewonnenen Koagulats zum Erhalt des Masterbatch.

2. Verfahren nach Anspruch 1, **dadurch gekennzeichnet, dass** die Phase der Gewinnung des Koagulats durch einen Filtrationsarbeitsgang durchgeführt wird.

3. Verfahren nach Anspruch 1, **dadurch gekennzeichnet, dass** die Phase der Gewinnung des Koagulats durch einen Zentrifugationsarbeitsgang durchgeführt wird.

4. Verfahren nach einem der Ansprüche 1 bis 3, **dadurch gekennzeichnet, dass** es sich bei dem Dienelastomerlatex um einen Naturkautschuklatex handelt.

5. Verfahren nach Anspruch 4, **dadurch gekennzeichnet, dass** es sich bei dem Dienelastomerlatex um einen konzentrierten Naturkautschuklatex handelt.

6. Verfahren nach einem der vorhergehenden Ansprüche, **dadurch gekennzeichnet, dass** der Füllstoff spontan mit dem Dienelastomerlatex beziehungsweise den Dienelastomerlatices koaguliert.

7. Verfahren nach dem vorhergehenden Anspruch, **dadurch gekennzeichnet, dass** es sich bei dem Füllstoff um Ruß handelt.

8. Verfahren nach Anspruch 6, **dadurch gekennzeichnet, dass** es sich bei dem Füllstoff um hydrophobiertes Siliziumdioxid handelt.

9. Verfahren nach einem der Ansprüche 6 bis 8, **dadurch gekennzeichnet, dass** die wässrige Dispersion (B) ein oder mehrere Tenside umfasst.

10. Verfahren nach Anspruch 9, **dadurch gekennzeichnet, dass** es sich bei dem Tensid um ein anionisches Tensid handelt.

11. Verfahren nach Anspruch 10, **dadurch gekennzeichnet, dass** es sich bei dem Tensid um Natriumdodecylsulfat handelt.

12. Verfahren nach einem der Ansprüche 9 bis 11, **dadurch gekennzeichnet, dass** die Tensidkonzentration in der wässrigen Dispersion (B) streng größer als 0,01 Gew.-%, bezogen auf das Gesamtgewicht der wässrigen Dispersion (B) ist.

13. Kautschukzusammensetzung auf Basis mindestens eines gemäß einem der Ansprüche 1 bis 12 hergestellten Dienelastomer-Füllstoff-Masterbatch.

14. Reifenlauffläche, umfassend eine Zusammensetzung nach Anspruch 13.

15. Reifen oder Halbzeug, umfassend mindestens eine Kautschukzusammensetzung nach Anspruch 13.

## Claims

1. Process for the preparation of a masterbatch in the liquid phase based on one or more diene elastomer latexes and on one or more fillers, comprising the following successive stages:
- preparation of a stable and homogeneous aqueous dispersion (C) by mixing
one or more diene elastomer latexes (A) with
one or more stable aqueous dispersions (B) of one or more fillers,
- homogenization of the aqueous dispersion (C),
- coagulation within the aqueous dispersion (C) of the said diene elastomer latex or latexes with the filler or fillers by supplying mechanical energy,
- recovery of the coagulum,
- drying the recovered coagulum in order to obtain the masterbatch.

2. Process according to Claim 1, **characterized in that** the phase of recovery of the coagulum is carried out by a filtering operation.

3. Process according to Claim 1, **characterized in that** the phase of recovery of the coagulum is carried out by a centrifuging operation.

4. Process according to any one of Claims 1 to 3, **characterized in that** the diene elastomer latex is a natural rubber latex.

5. Process according to Claim 4, **characterized in that** the diene elastomer latex is a concentrated natural rubber latex.

6. Process according to any one of the preceding claims, **characterized in that** the filler coagulates spontaneously with the said diene elastomer latex or latexes.

7. Process according to the preceding claim, **characterized in that** the filler is carbon black.

8. Process according to Claim 6, **characterized in that** the filler is hydrophobized silica.

9. Process according to any one of Claims 6 to 8, **characterized in that** the aqueous dispersion (B) comprises one or more surfactants.

10. Process according to Claim 9, **characterized in that** the surfactant is an anionic surfactant.

11. Process according to Claim 10, **characterized in that** the surfactant is sodium dodecyl sulphate.

12. Process according to any one of Claims 9 to 11, **characterized in that** the concentration of surfactant in the aqueous dispersion (B) is strictly greater than 0.01% by weight, with respect to the total weight of the aqueous dispersion (B).

13. Rubber composition based on at least one masterbatch of diene elastomer and of filler prepared according to any one of Claims 1 to 12.

14. Tyre tread comprising a composition according to Claim 13.

15. Tyre or semifinished product comprising at least one rubber composition according to Claim 13.
